# EUROPEAN PATENT SPECIFICATION

(11) **EP 1 888 951 B1**
(45) Date of publication and mention of the grant of the patent: **11.04.2012**
(21) Application number: 06700624.7
(22) Date of filing: 16.01.2006
(51) Int. Cl.: F16K 1/46, F16K 1/36, F16K 5/04, F16K 1/52, F24D 19/00, G05D 23/00

(54) **THERMAL UNIT VALVE**
WÄRMEEINHEITSVENTIL
SOUPAPE THERMIQUE UNITAIRE

(30) Priority: 31.05.2005 SE 0501259
(43) Date of publication of application: 20.02.2008
(73) Proprietor: Tour & Andersson AB, 524 80 Ljung (SE)
(72) Inventor: ENGELBREKTSSON, Anders, S-524 32 Herrljunga (SE); STENBERG, Daniel, 504 34 Borås (SE)
(74) Representative: Pitkänen, Hannu Alpo Antero
(86) International application number: PCT/SE2006/000054
(87) International publication number: WO 2006/130061

(56) References cited:
- EP-A1- 1 306 594
- DE-A1- 2 503 477
- DE-A1- 10 158 577
- DE-A1- 10 305 394
- GB-A- 2 133 511
- SE-B- 465 636
- US-B1- 6 776 392

## Description

The present invention relates to a thermal unit valve with a simplified construction of the complete top piece and in which the dimensional chain of the integral details has a greater degree of freedom, which renders the valve more cost efficient, despite the fact that the function of the final product is completely reliable and meets the requirements of the market place.

Modem valve constructions, which regarding certain functions are similar to the design described below, are impaired by several drawbacks, which will now be eliminated according the present invention.

Thus, e.g. EP 1 306 594 A1 describes a valve having a valve cone, which is provided with a especially designed sealing layer between the cone and the valve seat, but there is no solution, as to how the flow control will be carried out.

Another valve construction is described in DE 10158577 A1. This construction is provided with a decompressed cone, which seals against the seat by means of forces, which are not specifically described, a veil being provided, which can be adjusted with various opening degrees, but in this construction i.a. a sealing between the veil and the surrounding valve housing is missing, which could have prevented an unintentional flow from the seat past the veil and to the exhaust side.
Another known valve construction is described in DE 10 305 394 A1.

In the market place there are a few valve constructions, but they are often based on the fact, that there is a separate spring, which tries to open up a gap between the seat and the cone, this being secured by a special spring, which solely is to retain a veil or the like against the seat in those constructions, which utilize veils or other restricting devices and which only are rotated and do not have any mounting function/movement.

In many constructions a separate spring is used but only to guarantee, that the veil seals against the seat in its lower position.

The drawbacks of the constructions described above are many. The most important one of them is, that several construction elements are needed to secure the tightness between the cone and the veil respectively against the seat. In existing constructions a separate spring is used, designed to seal the cone and also a spring or the like in those cases, in which some type of device is used for a flow regulation/a veil. The result of this will be higher costs compared to the present invention.

Another drawback is, that the interacting details must be manufactured with a high dimensional accuracy in order to obtain the needed function and this also results in higher costs compared to the present invention. New products are often developed, which are based on a substantial number of new components, with a great initial effort as well as investment. In the present new invention a number of standard components from the manufacture of products in large series have been useful, and this means, that the new development to obtain the new thermal unit valve has been concentrated on the new valve insert with is part components.

The object of the present invention is to counteract and as far as possible remove the above described drawbacks. Also, the object of the invention is to develop the technology in this area as well as in other application areas, for other applications of valves, which are not particularly mentioned in this patent application.

These objects are attained by constructing the thermal unit valve according to the present invention in the way set forth in the characterizing clause of claim 1. Additional characterizing features and advantages of the invention are set forth in the following description, reference being made to the enclosed drawing, which show a few only exemplifying embodiments:

The drawings show in detail in:
- Fig. 1 a sectional view of the complete valve;
- Fig. 2 a sectional view of the upper part of the valve insert;
- Fig. 3 a sectional view of the lower part of the valve insert, and
- Fig. 4 schematically the manufacture of the geometrical design of the restriction function.

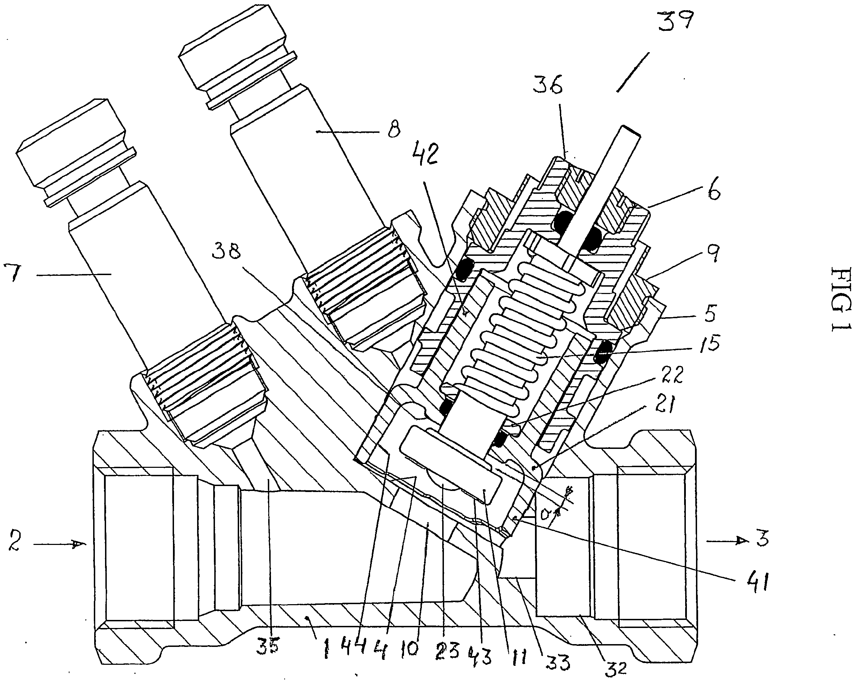

Fig. 1 shows just one example of how a valve according to the present invention may be designed. Embodiments are of course possible, which differ from this one, but in these embodiments the function is the same as the function described in the present text.

Thus, Fig. 1 shows the complete thermal unit valve in a sectional view, in which a valve housing 1 is shown, the intake side of which being provided with a preferably threaded connection 2 and the return side of which being provided with a corresponding threaded connection 3. There is also on valve housing 1 a connection support 5 for the complete top piece 6. Top piece 6 is fitted into connection support 5 and fastened by a lock nut 9.

Corresponding connections are provided for measuring e.g. pressure or temperature, with mounted measuring nipples, for the high pressure level of the intake side - measuring nipple 7 and for the low pressure level of the return side - measuring nipple 8 respectively. Measuring nipples 7 and 8 are standard components for the manufacturer and their function and design are described in earlier patent documents, e.g. SE 465 636.

In an installation valve 1 is connected to a tube system through connections 2 and 3 and besides top piece 6 is supplemented with some type of adjustment device - not shown in Fig. 1 - which controls the axial movement of the top piece and consequently also the position of cone 11 in relation to vent passage 10 in the valve, and consequently uncovers the passage from the feed side to the return side.

To be able to control the feed flow the construction is provided with a veil 21. A veil, a generic term, which is often used within e.g. the heating technology, regarding the restriction or control of flows, is a type of screen wall, which, according to the present invention, is designed in a special way, according to the following description.

The veil comprises two main parts, one lower part 41, which is cylindrical and regarding its dimensions is adjusted to the inner diameter 37 of connection support 5, and one upper part 42, which also is cylindrical and which interacts with adjustment portion 12, according to the following description.

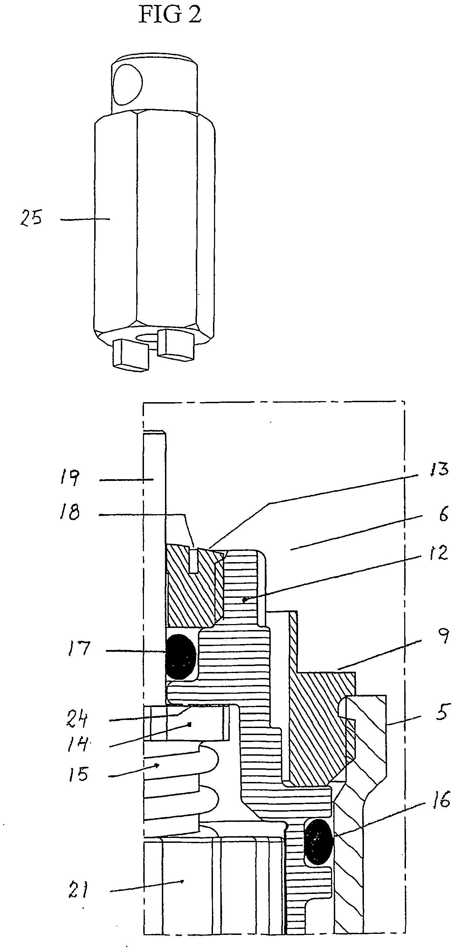

Fig. 2 shows additional details as to the construction of top piece 6. Thus, an adjustment portion 12 is used, which can rotate around its longitudinal axis using a key or the like, and this movement is transmitted to the detail, which in its lower portion comprises veil 21. The rotary motion of adjustment portion 12 of complete veil 21 may take place by means of grooves and bars, which are made in the two interacting details 12 and 21. There are a number of alternate embodiments, as to how this transmission of power may be carried out, but they will not be described in more detail. E.g. axially running bars can be used on the inner side of adjustment portion 12 in that portion, which is located opposite this portion of the cylindrical part of veil 21, and where those two details run parallel to each other or bars may be used on the corresponding part of veil 21 or other alternate constructions may be used in order to obtain an interaction between the two details. Components 12 and 21 are made of metal, preferably brass, but a suitable plastic material can be used instead.

In order to seal the construction against unintentional leakage out into the environment an O-ring 16 is used, which is mounted in an O-ring groove in adjustment portion 12, the O-ring groove interacting with the opposite side, the inside surface of connection support 5. By using this mounting of O-ring 16 the inner medium is prevented from reaching locking nut 9 above and further out into the environment. Valve spindle 19 is mounted within adjustment portion 12, and in connection with the final mounting of top piece 6 spring 15 and spring washer 22 are located in the cavity inside veil 21. Then cone 11 is mounted by means of mounting screw 23 on spindle 19 and its lower end surface 45. Cone 11 is in this case a cone, constructed in a fully normal way, i.e. it is a cylindrical metal part - with a thickness of about 2-5 mm - preferably made of brass, on which a sealing material 43 of rubber or a similar material is attached on the lower end surface of the cone. The dimensions of the cone are adjusted, its outer diameter with a margin, preferably with 3-8 mm, exceeding the diameter of the interacting vent passage 10 of valve housing 1, at the same time as its outer diameter is smaller than lower portion 41 of the veil and its inside diameter 44. At the final mounting of top piece 6 in connection support 5 adjustment portion 12 is locked in its axial position by locking nut 9, and in this position veil 21 will have a certain pre-stressing, which results in a sealing force against valve seat 4. The opposite force to this force will exist between cylindrical portion 14 of the spindle and inner corresponding plane 24 of the adjustment portion. The size of the force depends on spring 15 and its pre-stressing degree. In a last step during the mounting of complete top piece 6 O-ring 17 and stuffing box nut 13 are mounted. This can e.g. be done by means of an assembling tool 25, which is mounted on top of spindle top 19 and which engages grooves 18 in the stuffing box nut.

The construction of top piece 6 depends on several requirements. Thus, the dimensional chains of the integral parts - particularly 12 and 21 - in combination with the chosen spring parameters e.g. result in a construction, which always display a satisfactory function. The dimensional chains guarantee, that dimension "a" in Fig. 1 always is obtained, which in its turn means, that the forces, which have been obtained by means of spring 15, will be received by the correct detail, the correct surface.

Since the construction is based on the fact, that the details have the geometry, which allows a certain large play = dimension "a", the various details can be manufactured with larger tolerances as to certain dimensions, lower costs being obtained.

Since the spring forces always are received by selected parts of the construction, it is now possible to carry out a replacement of O-ring 17 during operation, since cylindrical part 14 of the spindle is pressed against plane 24 and consequently provides an acceptable sealing during the time, which a replacement of an O-ring requires.

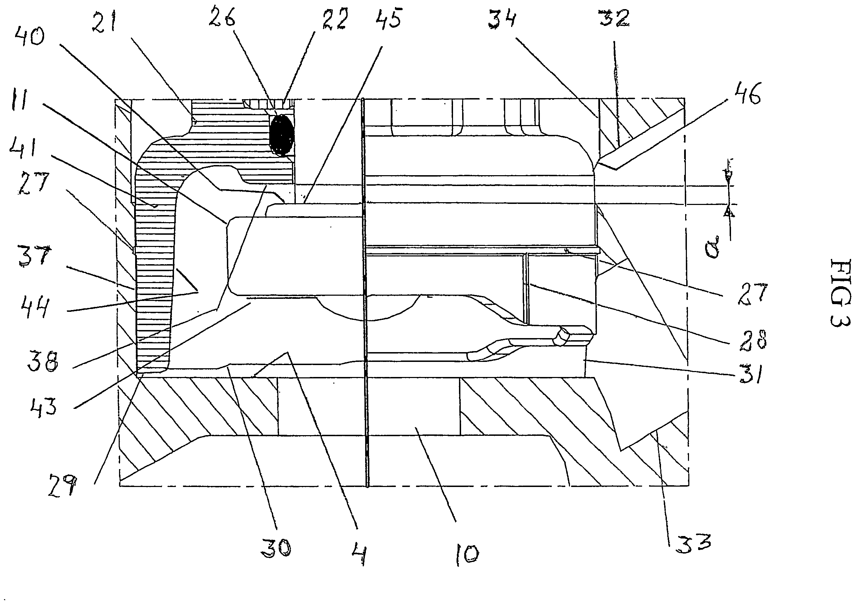

Fig. 3 shows the lower part of top piece 6 and portions of valve housing 1. The left part of the figure shows the veil sectioned, whereas the right part shows an exterior view of the veil. This figure also shows, that the lower part of the veil is designed in a special way. There is a gradually increased gap between lower edge 29 of the veil and valve seat 4 of valve housing 1. This stepped increase 30 is designed to give the valve a desired function, as regards the flow as a function of the degree of opening of the valve veil. In order to really guide the discharged flow in a correct way the veil has also been provided with a number of sealing lips or sealing zones, which are sealing between the circumferential surface of the veil and connection support 5 and its inner diameter 37. This inner diameter 37 is somewhat smaller than the rest of the diameter of connection support 5 and chosen in such a way, that it will interact with preferably a sealing edge or sealing lip 27, which extends around the veil, along the periphery of the veil and consequently in an efficient way seals against an unintentional flow upwards and around the veil outwards to discharge side 3. Also in the other direction, namely in parallel to the longitudinal axis of spindle 19 - and veil 21 - there is a number, preferably 3-6, of sealing lips or sealing ribs 28, which also have a flow-guiding function, since they obstruct an unintentional flow in the gap, which exists between the periphery of the veil and inner diameter 37 of connection support 5. Thanks to this constructive design of the peripheral surface of the veil it is now possible to guide the flow in an efficient and desirable way.

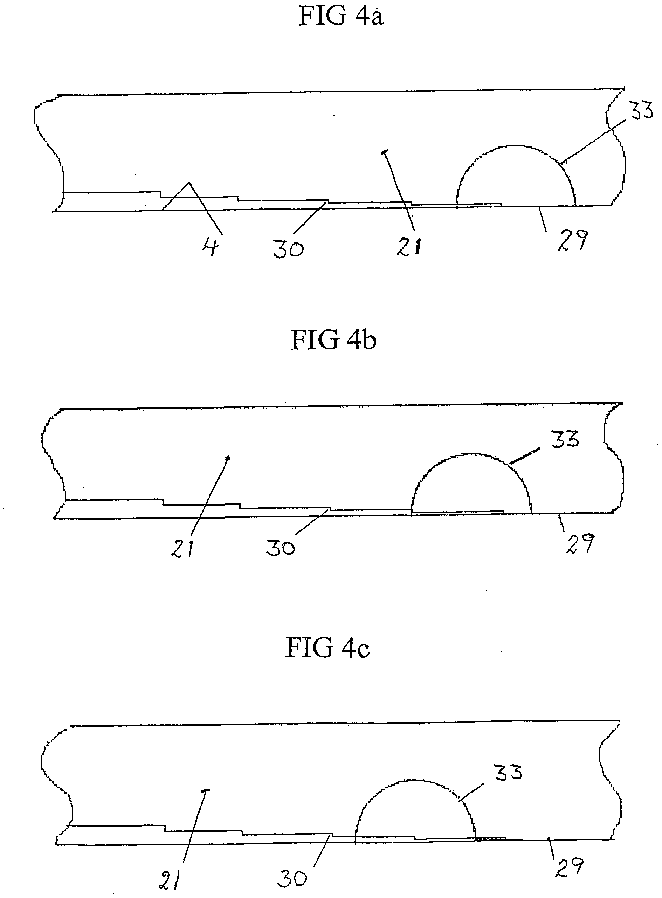

The design of the stepped increase of the opening between the veil and the valve seat is shown schematically in Fig. 4, where exhaust opening 31 out to return connection 3 of the valve has been depicted. By using the chosen design of the end surface of veil 21, the one directed towards valve seat 4, and its stepped increase of the distance to valve seat 4 it is possible to obtain a guided and calculated flow picture.

In Figs. 1 and 3 also borings 32 and 33 respectively in valve housing 1 and on the exhaust side of the valve are shown. In Fig. 3 it is shown, that boring 32 reaches boring 34 of the connection support, the diameter of which is somewhat larger than diameter 30. By means of opening gap 46, formed there-between, a communication has been established in the transition from boring 32 to boring 34 between the exhaust side and measuring nipple 8, which will register the low pressure level of the passing medium, since the pressure level of the medium can propagate via opening gap 46 to measuring nipple 8 and then mainly above veil 21.

The boring to diameter 33 is done in order to obtain a hole, an exhaust opening 31, which is tried out, in co-operation with the stepped change of the veil, to provide the suitable characteristic of the complete valve. The axial position of boring 33 in relation to connection support 5 and its lower, inner diameter 37 is also important for the final function of the valve. On the high pressure side, on the feed side of the valve, a corresponding communication from the medium to measuring nipple 7 via bored hole 35 is obtained.

Fig. 4 shows schematically a few positions for veil 21, which has been rotated around its central axis in relation to exhaust opening 31. The various positions, which are exemplified, preferably can be connected to a readable adjustment indication, which may be positioned on adjustment portion 12 and its end surface 36. By rotating this adjustment indication into a new position the corresponding change of exhaust opening 31 is obtained.

In Fig. 4a the opening position for the first step is shown, for adjustment position 1 of the readable adjustment indication. In this position only a portion of the smallest opening degree of the veil has entered into an "engagement position" in relation to boring 33.

In Fig. 4b the next step is shown, i.e. adjustment position 2 of the adjustment indication, and in a corresponding way Fig. 4c shows the next step of feasible adjustments.

The choice of a few adjustment steps and their mutual size change can of course be varied within the scope of the inventive idea. There are various requirements as to the parameters of the flow and by using a design according to the invention it is in principle possible to meet these various requirements in a technically and economically satisfactory way.

By using the present invention with a veil 21, provided with a stepped increasing distance to valve seat 4, it is now possible to obtain a guided and calculated flow picture for the thermal unit valve.

### ELEMENT LIST

1 = valve housing
2 = feed connection
3 = return connection
4 = valve seat
5 = connection support
6 = complete top piece
7 = measuring nipple - high pressure
8 = measuring nipple - low pressure
9 = lock nut
10 = vent passage
11 = cone
12 = adjustment portion
13 = stuffing box nut
14 = cylindrical portion of a spindle
15 = spring
16 = O-ring
17 = O-ring
18 = groove
19 = spindle
20 = assembling tool
21 = veil
22 = spring washer
23 = screw
24 = plane
25 = assembling tool
26 = O-ring
27 = sealing lip
28 = sealing lip
29 = lower edge of the veil
30 = stepped change
31 = exhaust opening
32 = boring
33 = boring
34 = boring
35 = boring
36 = end face, detail 12
37 = inner diameter
38 = inner upper wall
39 = thermal unit valve
40 = upper plane
41 = the lower portion of the veil
42 = the upper portion of the veil
43 = sealing material
44 = the inside diameter of the veil
45 = the end plane of the spindle
46 = opening gap

## Claims

1. A device for flow regulation and measurement of a medium in a heating or cooling system, which comprises a thermal unit valve (39), which is made of a valve housing (1), an ancillary connection for a feed connection (2), a return connection (3), a connection support (5) for a complete top piece (6) and besides with two measuring nipples for measuring pressure or temperature, one measuring nipple (7) on the feed side and one measuring nipple (8) for the return side respectively, the top piece (6), mounted in the connection support (5), the device being designed with a veil (21), mounted jointly with an adjustment portion (12) and locked in the axial direction by a lock nut (9), the veil (21) being pressed against a valve seat (4) by means of a spring (15), the veil (21) being designed to provide a successively increasing gap between a lower edge (29) of the veil (21) and the seat (4) of the valve housing, a valve cone (11) mounted on a valve spindle (19) and its lower end plane (45) never being mechanically limited in its movement upwards by an inner, upper wall (38) of the veil (21), the veil (21) being able to be rotated into various adjustment positions by rotating the adjustment portion (12), the same then moving the veil (21) into new suitable positions, the flow through the valve (1) being guided by the veil (21), which, since it can be rotated via the adjustment portion (12), provides a variable opening of an exhaust opening (31) and consequently a changed flow according to requirements or needs, this flow being measurable via a registration of the pressure levels at the measuring nipples (7) and (8) **characterized in that** a cylindrical portion (14) of the spindle (19) is pressed against an inner plane (24) of the adjustment portion (12) by a force opposite the spring force pressing the veil (21) downwards, this contact between the planes (14, 24) providing a seal, which renders possible the replacement of an O-ring (17) mounted to seal between the spindle (19) and the adjustment portion (12) during operation , and **in that** a number of sealing lips (27 and 28) are provided on the periphery of the veil (21), preventing an unintentional flow from the valve seat (4) outwards to the return connection (3).

2. A device according to claim 1, **characterized in that** the O-ring (17) is exchangeable during operation.

3. A device according to claim 1, **characterized in that** the veil (21) is designed in such a way, that a successively increased gap is obtained between the lower edge (29) of the veil (21), its end plane, and in relation to the valve seat (4), and and **in that** this increase is obtained through a stepped change (30) of the profile of the veil (21).

4. A device according to claim 1, **characterized in that** the sealing lip (27), which seals against inside diameter (37) of the connection support (5), is directed at right angles to the longitudinal axis of the veil (21) and the spindle (19) and consequently prevents a not desired flow on the outer side of the veil from the open valve seat (4) out towards the return connection (3) of the valve.

5. A device according to claim 1, **characterized in that** there are 3-6 sealing lips or sealing bars (28), which run parallel to the longitudinal axis of the veil and the spindle respectively and which seal against the connection support (5) and its inside diameter (37) and which consequently prevents a not desired flow from the open valve seat (4) out towards the return connection (3) of the valve.

6. A device according to claim 3, **characterized in that** a boring (33) in the return connection (3) has a tested axial position in relation to the connection support (5) and its inner diameter (37), providing the exhaust opening (31), which jointly with the veil (21), in a stepped way, increases the gap (30), providing the desired parameters of the complete thermal valve (39).

7. A device according to claim 3, **characterized in that** the number of steps (30) on the veil (21) can vary as to number and size and consequently allow the valve construction to take care of various requirement situations.

8. A device according to claim 1, **characterized in that** an upper plane (40) of the cone (11) always provides a play "a" up to the inner upper wall (38) of the veil, which guarantees that the sealing function between the cylindrical portion (14) of the spindle and the plane (24) of the adjustment portion (12) always will exist.

## Patentansprüche

1. Eine Vorrichtung zur Regelung eines Flusses und zum Messen eines Mediums in einem Heiz- oder Kühlsystem, die ein Ventil (39) für eine thermische Einheit aufweist, bestehend aus einem Ventilgehäuse (1), einer Nebenverbindung für eine Vorlaufverbindung (2), einer Rücklaufverbindung (3), einem Verbindungsträger (5) für ein vollständiges oberes Teil (6) und ferner mit zwei Messstutzen zum Messen von Druck oder Temperatur, ein Messstutzen (7) an der Vorlaufseite und ein Messstutzen (8) für die Rücklaufseite, jeweils entsprechend, das obere Teil (6), befestigt in dem Verbindungsträger (5), wobei die Vorrichtung mit einer Umhüllung (21) ausgestattet ist, die gemeinsam mit einem Anpassungsabschnitt (12) befestigt ist und in der axialen Richtung mittels einer Verriegelungsmutter (9) verriegelt ist, wobei die Umhüllung (21) gegen einen Ventilsitz (4) mittels einer Feder (15) gedrückt wird, wobei die Umhüllung (21) dafür ausgestaltet ist, um eine aufeinanderfolgend sich vergrößernde Lücke zwischen einer unteren Kante (29) der Umhüllung (21) und dem Sitz (4) des Ventilgehäuses bereitzustellen, ein Ventilzapfen (11), der auf einer Ventilspindel (19) angeordnet ist und deren untere Endebene (45) in ihrer Bewegung aufwärts niemals mechanisch limitiert ist von einer inneren oberen Wand (38) der Umhüllung (21), wobei die Umhüllung (21) in der Lage ist, in verschiedene Einstellungspositionen durch Rotieren des Einstellungsabschnitts (12) gedreht zu werden, wobei derselbige dann die Umhüllung (21) in neue geeignete Positionen bewegt, wobei der Fluss durch das Ventil (1) durch die Umhüllung (21) geleitet wird, die, da sie mittels des Einstellungsabschnitts (12) rotiert werden kann, eine variable Öffnung einer Ausstoßöffnung (31) und daher einen geänderten Fluss bezogen auf die Anforderungen oder Bedürfnisse bereitstellt, wobei der Fluss mittels einer Registrierung der Druckpegel an den Messstutzen (7) und (8) gemessen werden kann, **dadurch gekennzeichnet, dass** ein zylindrischer Abschnitt (14) der Spindel (19) gegen eine innere Ebene (24) des Einstellungsabschnitts (12) mittels einer Kraft entgegengesetzt der Federkraft gedrückt wird, die die Umhüllung (21) nach unten drückt, wobei der Kontakt zwischen den Ebenen (14, 24) eine Dichtung bereitstellt, die das Ersetzen eines O-Rings (17) ermöglicht, der zum Abdichten zwischen der Spindel (19) und dem Einstellungsabschnitt (12) während des Betriebs befestigt ist, und dass eine Anzahl von Dichtlippen (27 und 28) an der Peripherie der Umhüllung (21) bereitgestellt sind, die einen unerwünschten Fluss von dem Ventilsitz (4) nach außen zu der Rücklaufverbindung (3) verhindern.

2. Eine Vorrichtung nach Anspruch 1, **dadurch gekennzeichnet, dass** der O-Ring (17) während des Betriebs austauschbar ist.

3. Eine Vorrichtung nach Anspruch 1, **dadurch gekennzeichnet, dass** die Umhüllung (21) in einer solchen Art und Weise ausgestaltet ist, dass man eine nacheinanderfolgend sich vergrößernde Lücke zwischen der unteren Kante (29) der Umhüllung (21), der Endebene, und in Relation zu dem Ventilsitz (4) erhält, und dass man diese Vergrößerung durch eine stufenweise Änderung (30) des Profils der Umhüllung (21) erhält.

4. Eine Vorrichtung nach Anspruch 1, **dadurch gekennzeichnet, dass** die Dichtlippe (27), die gegen einen inneren Durchmesser (37) des Verbindungsträgers (5) abdichtet, in rechten Winkeln zu der Längsachse der Umhüllung (21) und der Spindel (19) gerichtet ist und daher einen nicht erwünschten Fluss an der äußeren Seite der Umhüllung von dem offenen Ventilsitz (4) aus in Richtung auf die Rücklaufverbindung (3) des Ventils verhindert.

5. Eine Vorrichtung nach Anspruch 1, **dadurch gekennzeichnet, dass** 3-6 Dichtlippen oder Dichtbalken (28) vorhanden sind, die parallel zu der Längsachse der Umhüllung und der Spindel verlaufen, jeweils entsprechend, und die gegen den Verbindungsträger (5) und seinen inneren Durchmesser (37) dichten und dementsprechend einen nicht erwünschten Fluss von dem offenen Ventilsitz (4) aus in Richtung der Rücklaufverbindung (3) des Ventils verhindern.

6. Eine Vorrichtung nach Anspruch 3, **dadurch gekennzeichnet, dass** eine Bohrung (33) in der Rücklaufverbindung (3) eine getestete axiale Position in Beziehung auf den Verbindungsträger (5) und seinen inneren Durchmesser (37) hat, um die Ausstoßöffnung (31) bereitzustellen, die gemeinsam mit der Umhüllung (21), in einer gestuften Art und Weise, die Lücke (30) vergrößert, um die gewünschten Parameter des vollständigen thermischen Ventils (39) bereitzustellen.

7. Eine Vorrichtung nach Anspruch 3, **dadurch gekennzeichnet, dass** die Anzahl der Stufen (30) an der Umhüllung (21) sich in Bezug auf Anzahl und Größe ändern kann und es dadurch erlaubt, dass die Ventilkonstruktion verschiedene Anforderungssituationen berücksichtigen kann.

8. Eine Vorrichtung nach Anspruch 1, **dadurch gekennzeichnet, dass** eine obere Ebene (40) des Ventilzapfens (11) immer ein Spiel "a" bis an die innere obere Wand (38) der Umhüllung bereitstellt, was sicherstellt, dass die Dichtfunktion zwischen dem zylindrischen Abschnitt (14) der Spindel und der Ebene (24) des Einstellungsabschnitts (12) immer existieren wird.

## Revendications

1. Dispositif de mesure et de régulation de débit d'un fluide dans un système de chauffage ou de refroidissement, lequel comprend un robinet d'unité thermique (39), qui est constitué d'un corps de robinet (1), d'une connexion auxiliaire pour une connexion d'alimentation (2), d'une connexion de retour (3), d'un support de connexion (5) pour une pièce supérieure (6) complète et avec, en outre, deux éléments filetés de mesure destinés à mesurer une pression ou une température, respectivement un élément fileté de mesure (7) sur le côté d'alimentation et un élément fileté de mesure (8) pour le côté de retour, la pièce supérieure (6) étant montée dans le support de connexion (5), le dispositif étant conçu avec un élément en forme de cloche (21) qui est monté conjointement avec une partie d'ajustement (12) et est bloqué suivant la direction axiale par un écrou de blocage (9), l'élément en forme de cloche (21) étant appliqué en appui contre un siège de robinet (4) au moyen d'un ressort (15), l'élément en forme de cloche (21) étant conçu pour fournir un intervalle successivement croissant entre un bord inférieur (29) de l'élément en forme de cloche (21) et le siège (4) du corps de robinet, un cône de robinet (11) monté sur une tige de robinet (19) et son plan d'extrémité inférieure (45) n'étant jamais limité mécaniquement dans son mouvement vers le haut par une paroi supérieure intérieure (38) de l'élément en forme de cloche (21), l'élément en forme de cloche (21) étant susceptible de faire l'objet d'une rotation dans diverses positions d'ajustement sous l'effet d'une rotation de la partie d'ajustement (12), cette dernière déplaçant alors l'élément en forme de cloche (21) dans de nouvelles positions convenables, le flux à travers le robinet (1) étant guidé par l'élément en forme de cloche (21), lequel, étant donné qu'il peut faire l'objet d'une rotation au moyen de la partie d'ajustement (12), fournit une ouverture variable de l'ouverture d'échappement (31) et par conséquent un débit modifié en fonction de conditions requises ou de besoins, ce débit étant mesurable au moyen d'un enregistrement des niveaux de pression à l'endroit des éléments filetés de mesure (7) et (8), **caractérisé en ce qu'**une partie cylindrique (14) de la tige (19) est appliquée sous pression sur un plan intérieur (24) de la partie d'ajustement (12) par une force opposée à la force de ressort appliquant sous pression l'élément en forme de cloche (21) vers le bas, ce contact entre les plans (14, 24) assurant une étanchéité, laquelle rend possible le remplacement d'un joint torique (17) monté pour assurer une étanchéité entre la tige (19) et la partie d'ajustement (12) en cours de fonctionnement, **et en ce qu'**un certain nombre de nervures d'étanchéité (27 et 28) sont prévues sur la partie périphérique de l'élément en forme de cloche (21), empêchant un flux non intentionnel allant du siège de robinet (4) vers l'extérieur vers la connexion de retour (3).

2. Dispositif suivant la revendication 1, **caractérisé en ce que** le joint torique (17) peut être échangé en cours de fonctionnement.

3. Dispositif suivant la revendication 1, **caractérisé en ce que** l'élément en forme de cloche (21) est agencé d'une manière telle qu'un intervalle successivement accru est obtenu entre le bord inférieur (29) de l'élément en forme de cloche (21), son plan d'extrémité, et par rapport au siège de robinet (4), **et en ce que** cet accroissement est obtenu au moyen d'une variation étagée (30) du profil de l'élément en forme de cloche (21).

4. Dispositif suivant la revendication 1, **caractérisé en ce que** la nervure d'étanchéité (27), qui assure une étanchéité vis-à-vis d'un diamètre intérieur (37) du support de connexion (5), est orientée à angle droit par rapport à l'axe longitudinal de l'élément en forme de cloche (21) et de la tige (19), et empêche en conséquence un flux non désiré sur le côté extérieur de l'élément en forme de cloche en allant du siège de robinet (4) ouvert vers la connexion de retour (3) du robinet.

5. Dispositif suivant la revendication 1, **caractérisé en ce qu'**il existe trois à six nervures d'étanchéité ou barrettes d'étanchéité (28) qui s'étendent respectivement parallèlement à l'axe longitudinal de l'élément en forme de cloche et de la tige et qui assurent une étanchéité vis-à-vis du support de connexion (5) et son diamètre intérieur (37), lequel empêche en conséquence un flux non désirée allant du siège de robinet (4) ouvert vers la connexion de retour (3) du robinet.

6. Dispositif suivant la revendication 3, **caractérisé en ce qu'**un perçage (33) dans la connexion de retour (3) a une position axiale testée vis-à-vis du support de connexion (5) et son diamètre intérieur (37), procurant l'ouverture d'échappement (31) qui, conjointement avec l'élément en forme de cloche (21), d'une manière étagée, accroît l'intervalle (30), assurant les paramètres voulus du robinet thermique (39) complet.

7. Dispositif suivant la revendication 3, **caractérisé en ce que** le nombre prévu de parties étagées (30) sur l'élément en forme de cloche (21) peut varier en nombre et dimension et permet en conséquence à la structure de robinet de tenir compte de diverses situations de conditions requises.

8. Dispositif suivant la revendication 1, **caractérisé en ce qu'**un plan supérieur (40) du cône (11) assure toujours un jeu "a" en remontant jusqu'à la paroi supérieure intérieure (38) de l'élément en forme de cloche, garantissant que la fonction d'étanchéité entre la partie cylindrique (14) de la tige et le plan (24) de la partie d'ajustement (12) va toujours exister.
